(19) Europäisches Patentamt
European Patent Office
Office européen des brevets

(11) EP 4 156 338 A1

(12) # EUROPEAN PATENT APPLICATION
published in accordance with Art. 153(4) EPC

(43) Date of publication:
**29.03.2023 Bulletin 2023/13**

(21) Application number: **21807546.3**

(22) Date of filing: **08.04.2021**

(51) International Patent Classification (IPC):
***H01M 4/505** (2010.01)* ***H01M 4/525** (2010.01)*
***H01M 10/052** (2010.01)* ***H01M 10/0567** (2010.01)*

(52) Cooperative Patent Classification (CPC):
**H01M 4/505; H01M 4/525; H01M 10/052; H01M 10/0567;** Y02E 60/10

(86) International application number:
**PCT/JP2021/014949**

(87) International publication number:
**WO 2021/235131 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2020 JP 2020089433**

(71) Applicant: **Panasonic Intellectual Property Management Co., Ltd.**
**Osaka-shi, Osaka 540-6207 (JP)**

(72) Inventor: **ZHONG Yuanlong**
**Osaka-shi, Osaka 540-6207 (JP)**

(74) Representative: **Novagraaf International SA**
**Chemin de l'Echo 3**
**1213 Onex, Geneva (CH)**

(54) **NON-AQUEOUS ELECTROLYTE SECONDARY BATTERY**

(57) A nonaqueous electrolyte secondary battery includes a positive electrode, a negative electrode, and a nonaqueous electrolyte. The positive electrode includes a positive electrode active material. The positive electrode active material includes a lithium transition metal composite oxide including Ni, Al, and at least one of Co and Mn. The lithium transition metal composite oxide is represented by a composition formula below: $Li_{\alpha}Ni_{(1-s-x2-y-z)}Co_{x1}Mn_{x2}Al_{y}M_{z}O_{2+\beta}$ (where $0.95 \leq \alpha \leq 1.05$, $0.5 \leq 1\text{-}x1\text{-}x2\text{-}y\text{-}z \leq 0.95$, $0 \leq x1 \leq 0.04$, $0 \leq x2 \leq 0.1$, $0< y \leq 0.1$, $0 \leq z \leq 0.1$, $-0.05 \leq \beta \leq 0.05$, M is at least one selected from the group consisting of Ti, Zr, Nb, Mo, W, Fe, Zn, B, Si, Mg, Ca, Sr, and Y). The nonaqueous electrolyte includes an isocyanuric acid ester component having at least one unsaturated organic group with an unsaturated carbon-carbon bond.

FIG. 1

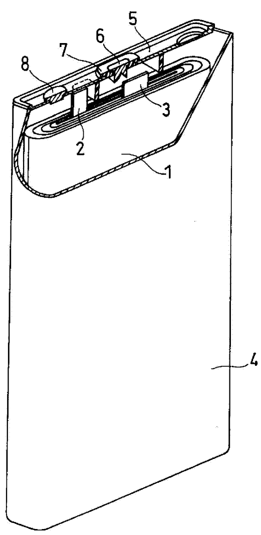


EP 4 156 338 A1

## Description

[Technical Field]

The present disclosure relates to a nonaqueous electrolyte secondary battery.

[Background Art]

Nonaqueous electrolyte secondary batteries represented by lithium ion secondary batteries include a positive electrode, a negative electrode, and a nonaqueous electrolyte. To ensure excellent characteristics of nonaqueous electrolyte secondary batteries, attempts have been made to improve battery constituents.

Patent Literature 1 has proposed a liquid nonaqueous electrolyte containing a compound (A) having an organic group with 1 to 20 carbon atoms and may have a substituent on the nitrogen atom of isocyanuric acid; and a nitrile compound, isocyanate compound, difluoro phosphoric acid compound, or fluoro sulfonic acid salt, and the like.

Patent Literature 2 has proposed a positive electrode active material for a liquid nonaqueous electrolyte secondary battery composed of a lithium-containing composite oxide represented by a general formula 1: $Li_xNi_{1-y-z-v-w}Co_yAl_zM^1vM^2wO_2$, and the element $M^1$ in the general formula 1 is at least one selected from the group consisting of Mn, Ti, Y, Nb, Mo, and W, and the element $M^2$ is at least two selected from the group consisting of Mg, Ca, Sr, and Ba, and the element $M^2$ includes at least Mg and Ca, the formula 1 satisfies $0.97 \leq x \leq 1.1$, $0.05 \leq y \leq 0.35$, $0.005 \leq z \leq 0.1$, $0.0001 \leq v \leq 0.05$, and $0.0001 \leq w \leq 0.05$, the composite oxide is in a form of secondary particles of agglomerated primary particles, the primary particles of the composite oxide has an average particle size of 0.1 μm or more and 3 μm or less, and the secondary particles of the composite oxide has an average particle size of 8 μm or more and 20 μm or less.

[Citation List]

[Patent Literature]

PLT1: Japanese Laid-Open Patent Publication No.2014-194930
PLT2: Japanese Laid-Open Patent Publication No.2006-310181

[Summary of Invention]

The lithium-containing composite oxide includes a transition metal such as Co. When the Co content is reduced, it is advantageous in terms of costs, but cycle characteristics of the nonaqueous electrolyte secondary battery are deteriorated.

An aspect of the present disclosure relates to a nonaqueous electrolyte secondary battery including a positive electrode, a negative electrode, and a nonaqueous electrolyte, wherein,

the positive electrode includes a positive electrode active material,
the positive electrode active material includes a lithium transition metal composite oxide including Ni, Al, and at least one of Co and Mn,
the lithium transition metal composite oxide is represented by a composition formula below:

$$Li_{\alpha}Ni_{(1-x1-x2-y-z)}Co_{x1}Mn_{x2}Al_yM_zO_{2+\beta}$$

(where $0.95 \leq \alpha \leq 1.05$, $0.5 \leq 1-x1-x2-y-z \leq 0.95$, $0 \leq x1 \leq 0.04$, $0 \leq x2 \leq 0.1$, $0< y \leq 0.1$, $0 \leq z \leq 0.1$,$-0.05 \leq \beta \leq 0.05$, and M is at least one selected from the group consisting of Ti, Zr, Nb, Mo, W, Fe, Zn, B, Si, Mg, Ca, Sr, and Y), and the nonaqueous electrolyte includes an isocyanuric acid ester component having at least one unsaturated organic group with an unsaturated carbon-carbon bond.

Nonaqueous electrolyte secondary batteries with excellent cycle characteristics can be provided.

[Brief Description of Drawings]

[FIG. 1]

FIG. 1 is a partially cutaway schematic oblique view of a nonaqueous electrolyte secondary battery of an embodiment of the present disclosure.

[Description of Embodiments]

Reducing the Co content and increasing the Ni content of the lithium-containing composite oxide is advantageous in terms of costs and allows for ensuring a high capacity. However, when the lithium-containing composite oxide has a small Co content and a large Ni content, the lithium-containing composite oxide has unstable crystal structure, and the transition metal such as Ni contained in the lithium-containing composite oxide tends to be dissolved. The dissolution of the transition metal decreases the capacity and deteriorates cycle characteristics. In particular, with the composite oxide having a large Ni content, the dissolved Ni may form an oxidized film having a structure that prevents absorbing and releasing of Li ions at the composite oxide particle surface, and may cause deterioration in cycle characteristics, in some cases. Furthermore, the dissolved metal composing the composite oxide may precipitate at the negative electrode and affect durability as the secondary battery.

In view of the above, the nonaqueous electrolyte secondary battery of an aspect of the present disclosure includes a positive electrode, a negative electrode, and a nonaqueous electrolyte. The positive electrode includes a positive electrode active material. The positive electrode active material includes a lithium transition metal composite oxide including Ni, Al, and at least one of Co and Mn. The lithium transition metal composite oxide is represented by a composition formula below:

$$Li_{\alpha}Ni_{(1-x1-x2-y-z)}Co_{x1}Mn_{x2}Al_{y}M_{z}O_{2+\beta}$$

(where $0.95 \leq \alpha \leq 1.05$, $0.5 \leq 1\text{-}x1\text{-}x2\text{-}y\text{-}z \leq 0.95$, $0 \leq x1 \leq 0.04$, $0 \leq x2 \leq 0.1$, $0< y \leq 0.1$, $0 \leq z \leq 0.1$,$-0.05 \leq \beta \leq 0.05$, and M is at least one selected from the group consisting of Ti, Zr, Nb, Mo, W, Fe, Zn, B, Si, Mg, Ca, Sr, and Y). The nonaqueous electrolyte includes an isocyanuric acid ester component having at least one unsaturated organic group with an unsaturated carbon-carbon bond. This isocyanuric acid ester component may be referred to as a first component below. The lithium-containing composite oxide represented by the above-described composition formula may be referred to as a first lithium-containing composite oxide.

In the first lithium-containing composite oxide, the Co ratio x1 is relatively small, 0.04 or less, and the Ni ratio is relatively large, 0.5 or more. With such a first lithium-containing composite oxide, compared with the lithium-containing composite oxide with a Co ratio x1 of larger than 0.04, the resistance of the composite oxide itself is large, and the surface resistance of the composite oxide particle is large. Furthermore, the composite oxide particle is brittle, and easily cracks, and the cracks involved with charge and discharge increases the resistance. Thus, use of the first lithium-containing composite oxide for the positive electrode active material may increase the resistance of the positive electrode. Also, dissolution of Ni becomes significant, and decreases the capacity. Therefore, with the first lithium-containing composite oxide, compared with the lithium-containing composite oxide with a Co ratio x1 of larger than 0.04, when used as the positive electrode active material of the nonaqueous electrolyte secondary battery, cycle characteristics tend to be deteriorated. In the following, the lithium-containing composite oxide with a Co ratio x1 of larger than 0.04 is referred to as the second lithium-containing composite oxide.

The present disclosure allows for, as described above, with use of the nonaqueous electrolyte including the first component, even if the first lithium-containing composite oxide is used as the positive electrode active material, cycle characteristics can be improved. Furthermore, in the nonaqueous electrolyte secondary battery, increase in the internal resistance after repetition of charge and discharge can be suppressed. On the other hand, even if the nonaqueous electrolyte including the first component is combined with the second lithium-containing composite oxide, it does not greatly affect the effects of improving cycle characteristics. Thus, by using the nonaqueous electrolyte including the first component in combination with the first lithium-containing composite oxide, compared with the case where it is combined with the second lithium-containing composite oxide, the effects of improvement in cycle characteristics by the first component are be significantly brought out.

The above-described effects of the nonaqueous electrolyte secondary battery of present disclosure may be from the following reasons. By using the nonaqueous electrolyte including the first component for the first lithium-containing composite oxide, a film with high ion conductivity is formed on the positive electrode active material particle surface. In this manner, Ni dissolution is suppressed, and deterioration of the positive electrode active material particle is suppressed, and also increase in the resistance of the positive electrode active material particles can be suppressed. Therefore, the high capacity of Ni is sufficiently brought out. As a result, by combining the nonaqueous electrolyte including the first component with the first lithium-containing composite oxide, compared with the case where it is combined with the second lithium-containing composite oxide, excellent cycle characteristics can be ensured. Furthermore, a degree of the increase in the internal resistance when repeating charge and discharge can be decreased.

In the following, the constituents of the nonaqueous electrolyte secondary battery of the present disclosure are

described more specifically.

(Positive Electrode)

The positive electrode includes a positive electrode active material. The positive electrode usually includes a positive electrode current collector, and a positive electrode mixture supported by the positive electrode current collector. The positive electrode includes, usually, a layered positive electrode mixture (hereinafter, referred to as a positive electrode mixture layer) supported on the positive electrode current collector. The positive electrode mixture layer can be formed by applying a positive electrode slurry in which the ingredients of the positive electrode mixture are dispersed in a dispersion medium on a surface of the positive electrode current collector, and drying a resultant coating film. The dried coating film may be rolled, if necessary. The positive electrode mixture layer may be formed on one surface of the positive electrode current collector, or may be formed on both surfaces thereof.
The positive electrode mixture may contain the positive electrode active material as an essential component, and may contain, for example, a binder, a thickener, and a conductive agent as an optional component.

(Positive electrode active material)

The positive electrode active material includes a first lithium-containing composite oxide. The first lithium-containing composite oxide includes Ni, Al, and at least one of Co and Mn, and is represented by the above-described composition formula. Such a first lithium-containing composite oxide has, for example, a layered crystal structure (e.g., rock salt type crystal structure).
In the above-described composition formula, $\alpha$ showing the lithium atomic ratio is $0.95 \leq \alpha \leq 1.05$. The "$\alpha$" decreases and increases by charge and discharge. In $(2+\beta)$ showing the oxygen atomic ratio, $\beta$ is $-0.05 \leq \beta \leq 0.05$.
The 1-x1-x2-y-z showing the Ni ratio (atomic ratio) is 0.5 or more and 0.95 or less, may be 0.8 or more and 0.95 or less, or 0.9 or more and 0.95 or less.
The x1 showing the Co ratio (atomic ratio) is 0 or more and 0.04 or less, preferably 0 or more and 0.02 or less, and more preferably 0 or more 0.015 or less, or may be 0. When x1 is 0, it includes the case where Co is the detection limit or less.
The higher the Ni ratio, the more lithium ions can be drawn from the composite oxide during charging, and a higher capacity can be achieved. However, Ni in such a composite oxide with a high capacity tends to have a high valency. Furthermore, with a high Ni ratio, the Co ratio x1 becomes smaller relatively. In this case, particularly in a fully charged state, the crystal structure tends to be unstable, changes to a crystal structure in which reversible absorbing and releasing of lithium ions are difficult by repetitive charge and discharge, and is easily inactivated. As a result, cycle characteristics are easily deteriorated. With the nonaqueous electrolyte secondary battery of the present disclosure, even though the first lithium-containing composite oxide with a high Ni ratio and a small Co ratio x1 is used, by combining the nonaqueous electrolyte including the first component, excellent cycle characteristics can be ensured.
The x2 showing the Mn ratio (atomic ratio) is $0 \leq x2 \leq 0.1$, and preferably $0< x2 \leq 0.1$. When the first lithium-containing composite oxide includes Mn, thermal stability can be improved.
The y showing the Al ratio (atomic ratio) is $0< y \leq 0.1$, and preferably $0.03 \leq y \leq 0.1$, or may be $0.05 \leq y \leq 0.1$. By the first lithium-containing composite oxide including Al, the crystal structure is stabilized and excellent cycle characteristics can be ensured.
The case in which $0 \leq x1 \leq 0.015$ or $x1 = 0$ , $0< x2 \leq 0.1$, and $0.05 \leq y+ x2 \leq 0.2$ are satisfied is more preferred. In this case, effects of the first component become more significant, and while suppressing increase in the internal resistance after repeating charge and discharge, more excellent cycle characteristics can be ensured.
The first lithium-containing composite oxide may include an element M. The element M is at least one selected from the group consisting of Ti, Zr, Nb, Mo, W, Fe, Zn, B, Si, Mg, Ca, Sr, and Y. In particular, when at least one of Nb, Sr, and Ca is included in the first lithium-containing composite oxide, it is likely that the surface structure of the composite oxide is stabilized, and that dissolution of metal is suppressed, and higher cycle characteristics are achieved advantageously. In the first lithium-containing composite oxide particles, it is more effective that the Nb, Sr, and Ca exist in a higher content in the vicinity of the particle surface.
The z showing the element M ratio is 0 or more, may be more than 0, may be 0.0001 or more, or 0.0005 or more, or 0.001 or more. The z is 0.1 or less, may be 0.05 or less, or 0.01 or less, or 0.005 or less. These lower limit values and upper limit values can be combined in any combination.
The content of the elements composing the composite oxide can be determined by an inductively coupled plasma atomic emission spectroscopy (ICP-AES), electron probe microanalyzer (EPMA), energy dispersive X-ray spectroscopy (EDX), or the like.
The first lithium-containing composite oxide is, for example, secondary particles of a plurality of primary particles agglomerated. The primary particles have a particle size of, generally 0.05 $\mu$m or more and 1 $\mu$m or less. The composite

oxide has an average particle size of, for example, 3 μm or more and 30 μm or less, or may have an average particle size of 5 μm or more and 25 μm or less.

In this specification, the average particle size means a particle size (volume average particle size) having a volume integrated value of 50% in the particle size distribution measured by the laser diffraction scattering method. Such a particle size may be referred to as D50. For example, "LA-750" manufactured by Horiba Corporation can be used as the measuring device.

The first lithium-containing composite oxide can be produced, for example, based on the following procedures. First, a solution including an alkaline substance such as sodium hydroxide is dropped to a solution including a salt containing metal elements composing the first lithium-containing composite oxide while stirring, to adjust the pH to the alkaline side (e.g., 8.5 to 12.5), to deposit a composite hydroxide including metal elements (Ni, Al, and as necessary Co, Mn, element M, and the like). Then, by baking the composite hydroxide, a composite oxide including the metal elements is obtained. The baking temperature at this time is not particularly limited, and for example, 300°C to 600°C. Then, the composite oxide is mixed with a lithium compound, and the mixture is baked under an oxygen flow to produce the first lithium-containing composite oxide. The baking temperature at this time is not particularly limited, and for example, 450°C or higher and 800°C or lower. Each of the baking processes may be performed by a single step, or by multiple steps, or with temperature increase. A compound including the element M may be mixed when the composite oxide is mixed with the lithium compound. By adjusting the ratios of the raw materials to be used, the ratios of the elements in the first lithium-containing composite oxide can be adjusted. Examples of the lithium compound include a lithium salt, oxide, hydroxide, halogenated product, and hydrogenated product. Examples of the compound including the element M include a salt, hydroxide, and oxide.

The positive electrode active material may include a lithium-containing composite oxide other than the first lithium-containing composite oxide, but preferably, the ratio of the first lithium-containing composite oxide is high. The first lithium-containing composite oxide ratio in the positive electrode active material is, for example, 90 mass% or more, or may be 95 mass% or more. The first lithium-containing composite oxide ratio in the positive electrode active material is 100 mass% or less. The positive electrode active material may be composed only of the first lithium-containing composite oxide.

(Others)

For the binder, for example, a resin material is used. Examples of the binder include fluorine resin (e.g., polytetrafluoroethylene, polyvinylidene fluoride), polyolefin resin (e.g., polyethylene, polypropylene), polyamide resin (e.g., aramid resin), polyimide resin (e.g., polyimide, polyamide-imide), acrylic resin (e.g., polyacrylic acid, polymethacrylic acid, acrylic acid-methacrylic acid copolymer, ethylene-acrylic acid copolymer, or a salt thereof), vinyl resin (e.g., polyvinyl acetate), and rubber material (e.g., styrene-butadiene copolymer rubber (SBR)). A kind of binder may be used singly, or two or more kinds thereof may be used in combination.

Examples of the thickener include cellulose derivatives such as cellulose ethers. Examples of the cellulose derivatives include CMC and modified products thereof, and methyl cellulose. The modified products of CMC also include CMC salts. Examples of the salts include alkali metal salt (e.g., sodium salt), and ammonium salt. A kind of thickener may be used singly, or two or more kinds thereof may be used in combination.

Examples of the conductive agent include electrically conductive fiber and electrically conductive particles. Examples of the electrically conductive fiber include carbon fiber, carbon nanotube, and metal fiber. Examples of the electrically conductive particles include electrically conductive carbon (carbon black, graphite, and the like), and metal powder. A kind of conductive agent may be used singly, or two or more kinds thereof may be used in combination.

The dispersion medium used for the positive electrode slurry is not particularly limited, and examples thereof include water, alcohol (e.g., ethanol), ether (e.g., tetrahydrofuran), amide (e.g., dimethylformamide), N-methyl-2-pyrrolidone (NMP), and a solvent mixture thereof.

The positive electrode current collector is selected in accordance with the type of the nonaqueous electrolyte secondary battery. Examples of the positive electrode current collector include a sheet type one. Examples of the current collector include metal foil. A porous one may be used for the current collector. Examples of the porous current collector include a net, punched sheet, and expanded metal. Examples of the material of the positive electrode current collector include stainless steel, aluminum, aluminum alloy, and titanium.

The thickness of the positive electrode current collector is not particularly limited, and is, for example, 1 to 50 μm, or may be 5 to 30 μm.

(Negative Electrode)

The negative electrode includes a negative electrode active material. The negative electrode usually includes a negative electrode mixture including a negative electrode active material and a negative electrode current collector

that supports the negative electrode mixture. The negative electrode usually includes a layered negative electrode mixture (hereinafter, referred to as the negative electrode mixture layer). The negative electrode mixture may further include at least one selected from the group consisting of a binder, a thickener, and a conductive agent.

(Negative electrode active material)

For the negative electrode active material, metal lithium, or a lithium alloy may be used, and a material that is capable of electrochemically absorbing and releasing lithium ions is preferably used. Examples of such a material include a carbonous material, a Si-containing material, and a Sn-containing material. The negative electrode may include one kind of negative electrode active material, or two or more kinds may be used in combination. Preferably, of the negative electrode active materials, a carbonous material or a Si-containing material is used. The carbonous material and the Si-containing material may be used in combination.

(Carbonous material)

Examples of the carbonous material include graphite, graphitizable carbon (soft carbon), and non-graphitizable carbon (hard carbon). A kind of carbonous material may be used singly, or two or more kinds thereof may be used in combination.

In particular, graphite is preferred as the carbonous material, because it has excellent charge and discharge stability, and has a small irreversible capacity. Examples of the graphite include natural graphite, artificial graphite, and graphitized mesophase carbon particles. The graphite particles may partially include amorphous carbon, graphitizable carbon, or non-graphitizable carbon.

Graphite is a carbonous material in which a graphite type crystal structure is developed. The plane spacing d002 between the (002) planes of the graphite measured by X-ray diffractometry may be, for example, 0.340 nm or less, or 0.3354 nm or more and 0.340 nm or less. The crystallite size Lc (002) of the graphite may be, for example, 5 nm or more, or 5 nm or more and 200 nm or less. The crystallite size Lc (002) is measured by, for example, the Scherrer method. When the plane spacing d002 and the crystallite size Lc (002) of the (002) planes of the graphite fall within the above ranges, a high capacity is easily obtained.

(Si-containing material)

Examples of the Si-containing material include Si simple substance, a silicon alloy, and a silicon compound (silicon oxide, and the like), and a composite material in which silicon particles (fine Si phase) are dispersed in a lithium ion conductive phase (matrix). Examples of the silicon oxide include $SiO_x$ particles. The x is, for example $0.5 \leq x< 2$, or may be $0.8 \leq x \leq 1.6$.

Preferably, in view of ensuring better cycle characteristics, the Si-containing material includes the above-described composite material. The lithium ion conductive phase preferably includes at least one selected from the group consisting of a $SiO_2$ phase and a silicate phase. The lithium ion conductive phase may further include a carbon phase. The lithium ion conductive phase may form a noncrystalline phase. The Si-containing material may include a composite material in which silicon particles are dispersed in a $SiO_2$ phase, a composite material in which silicon particles are dispersed in a silicate phase, a composite material in which silicon particles are dispersed in a carbon phase, and the like.

The $SiO_2$ phase is an amorphous phase containing 95 mass% or more silicon dioxide. The composite material in which silicon particles are dispersed in the $SiO_2$ phase is represented by $SiO_x$, where x may be within the above range. $SiO_x$ is obtained, for example, by heat-treating silicon monoxide and separating it into a $SiO_2$ phase and a fine Si phase by disproportionation. By observing the cross section of $SiO_x$ particles using a transmission electron microscope (TEM), the Si particles dispersed in the $SiO_2$ phase can be recognized.

Preferably, the silicate phase contains at least one of alkali metal elements (group 1 elements other than hydrogen in a long period type periodic table) and group 2 elements in a long period type periodic table. The alkali metal elements include lithium (Li), potassium (K), sodium (Na), and the like. The group 2 elements include magnesium (Mg), calcium (Ca), strontium (Sr), barium (Ba), and the like. The lithium silicate phase may have a composition represented by a formula: $Li_{2y1}SiO_{2+y1}(0< y_1< 2)$. The yi may be 1/2, or 1. The composite material in which silicon particles are dispersed in a silicate phase can be obtained, for example, by pulverizing a mixture of silicate and a raw material silicon with stirring in a ball mill or the like to make fine particles, and then subjecting the mixture to heat treatment in an inert atmosphere.

The silicon particles dispersed in the silicate phase may be contained, relative to a total of the composite material, in an amount of 30 mass% or more and 95 mass% or less, 35 mass% or more and 75 mass% or less.

The carbon phase includes, for example, amorphous carbon which is less crystalline. The amorphous carbon may be, for example, graphitizable carbon (hard carbon) or non-graphitizable carbon (soft carbon). A composite material

in which silicon particles are dispersed in a carbon phase can be obtained, for example, by pulverizing a mixture of a carbon source and a raw material silicon with stirring in a ball mill or the like to make fine particles, and then subjecting the mixture to heat treatment in an inert atmosphere. For example, a saccharide such as carboxy methylcellulose (CMC) or a water-soluble resin such as polyvinylpyrrolidone is used as the carbon source.

The composition of the Si-containing material can be determined, for example, by obtaining a reflected electron image of the cross sections of the negative electrode mixture layer with a field emission scanning electron microscope (FE-SEM), observing the Si-containing material particles, and performing element analysis on the observed Si-containing material particles. For the element analysis, for example, EPMA analysis is used. The above-described analysis also allows for the determination of the composition of the lithium ion conductive phase.

A kind of Si-containing material may be used singly, or two or more kinds thereof may be used in combination.

The Si-containing material may be, for example, a material in a particle form. The Si-containing material has an average particle size (D50) of, for example, 1 μm or more and 25 μm or less, or may be 4 μm or more and 15 μm or less.

In view of improvement in electrical conductivity, at least a portion of the particle surface of the Si-containing material particles may be covered with a conductive layer. The conductive layer contains a conductive material such as conductive carbon. The amount covered with the conductive layer is, for example, 1 part by mass or more and 10 parts by mass or less per 100 parts by mass of a total of the Si-containing material particles and the conductive layer. The Si-containing material particles having a conductive layer on its surface is produced by, for example, mixing coal-pitch or the like with the Si-containing material particles, and then subjecting the mixture to heat treatment in an inert atmosphere.

Examples of the binder include those resin materials exemplified for the positive electrode. The conductive agent can be selected, for example, from those exemplified for the positive electrode.

The shape and the thickness of the negative electrode current collector can be selected from those shapes and ranges explained for the positive electrode current collector. For the material of the negative electrode current collector, stainless steel, nickel, nickel alloy, copper, and copper alloy are exemplified.

The dispersion medium used for the negative electrode slurry can be selected from those exemplified for the positive electrode.

(Nonaqueous Electrolyte)

The nonaqueous electrolyte generally includes a nonaqueous solvent, and a lithium salt dissolved in the nonaqueous solvent, and in addition to them, a first component. The nonaqueous electrolyte may further include a cyclic sulfite ester component. The cyclic sulfite ester component may be referred to as a second component.

(First component)

Examples of the first component include an isocyanuric acid ester having an unsaturated organic group having an unsaturated carbon-carbon bond in at least one of the three nitrogen atoms forming the ring of the isocyanuric acid. The first component may have the above-described unsaturated organic group at each of two or three nitrogen atoms, out of the three nitrogen atoms forming the isocyanuric acid ring.

The first component can be represented by, for example, the formula (1) below.

[Chemical formula 1]

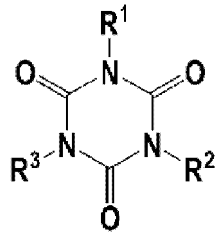

(1)

(where each of $R^1$ to $R^3$ is a hydrogen atom, a halogen atom, or an organic group, at least one of $R^1$ to $R^3$ is an unsaturated organic group having an unsaturated carbon-carbon bond).

At least two of $R^1$ to $R^3$ may be the same, or all of them may be different.

Examples of the halogen atom represented by $R^1$ to $R^3$ include fluorine atom, chlorine atom, bromine atom, and iodine atom. Examples of the organic group include an organic group with 1 to 20 carbon atoms. Examples of the

organic group include a hydrocarbon group which may have a substituent, alkoxy group, alkoxy carbonyl group, acyl group, and nitrile group. The alkoxy group is represented by $R^a$-O-, the alkoxy carbonyl group is represented by $R^a$-O-C(= O)-, and the acyl group is represented by $R^a$-C(= O)-. In these groups, $R^a$ is a hydrocarbon group which may have a substituent.

The hydrocarbon group represented by $R^1$ to $R^3$ and $R^a$ may be any of an aliphatic hydrocarbon group, alicyclic hydrocarbon group, and aromatic hydrocarbon group. Examples of the aliphatic hydrocarbon group include an alkyl group, alkenyl group, alkynyl group, and dienyl group. The aliphatic hydrocarbon group may be any of a straight chain and a branched chain. The aliphatic hydrocarbon group has carbon atoms of, for example, 1 to 20, and it may be 1 to 10, 1 to 6, or 1 to 4. Examples of the alicyclic hydrocarbon group include a cycloalkyl group, cycloalkenyl group, and cycloalkadienyl group. The alicyclic hydrocarbon group has carbon atoms of, for example, 4 to 20, and it may be 5 to 10, 5 to 8 or 5 to 6. The alicyclic hydrocarbon group also includes a condensed ring having an aromatic ring such as a benzene ring and a pyridine ring, condensed to an alicyclic hydrocarbon group. Examples of the aromatic hydrocarbon group include an aryl group. Examples of the aryl group include a phenyl group, naphthyl group, and biphenyl group. The aromatic hydrocarbon group has carbon atoms of, for example, 6 to 20, or may have carbon atoms of 6 to 14 or 6 to 10. The aromatic hydrocarbon group also includes a condensed ring having a nonaromatic hydrocarbon ring or nonaromatic heterocyclic ring condensed to an aromatic hydrocarbon group. The hydrocarbon ring or the heterocyclic ring may be 4 or more and 8 or less -membered, or 5 or more and 8 or less - membered, or 5-membered or 6-membered.

Examples of the alkyl group include a methyl group, ethyl group, n-propyl group, isopropyl group, n-butyl group, sec-butyl group, tert-butyl group, hexyl group, 2-ethylhexyl group, decyl group, tetra decyl group, and stearyl group. Examples of the alkenyl group include a vinyl group, allyl group, prop-2-en-1-yl group, 4-hexenyl group, and 5-hexenyl group. Examples of the alkynyl group include an ethinyl group and propargyl group. Examples of the dienyl group include a 1,3-butadien-1-yl group. Examples of the cycloalkyl group include a cyclopentyl group, cyclohexyl group, and cyclooctyl group. Examples of the cycloalkenyl group include a cyclohexenyl group and cyclooctenyl group. Examples of the cycloalkadienyl group include a cyclopenta dienyl group.

Examples of the substituent that may be included in the hydrocarbon group include a halogen atom, hydroxy group, alkyl group, alkenyl group, dienyl group, aryl group, aralkyl group, alkoxy group, alkoxy carbonyl group, acyl group, acyl oxy group, nitrile group, and oxo group (= O). Examples of the halogen atom include fluorine atom, chlorine atom, bromine atom, and iodine atom. The alkyl group and the alkoxy group have carbon atoms of, for example, 1 to 6, or 1 to 4. The alkenyl group, alkoxy carbonyl group, acyl group, and acyl oxy group have carbon atoms of, for example, 2 to 6, or 2 to 4. The dienyl group has carbon atoms of, for example, 4 to 8. Examples of the aryl group include an aryl group having a number of carbon atoms 6 to 10, such as a phenyl group. Examples of the aralkyl group include an aralkyl group having 7 to 12 carbon atoms such as a benzyl group and phenethyl group. The hydrocarbon group may have one of these substituents, or two or more of these. When the hydrocarbon group has two or more substituents, at least two substituents may be the same, or all of the substituents may be different.

The above-described unsaturated organic group having an unsaturated carbon-carbon bond will suffice. Examples of the unsaturated carbon-carbon bond include a carbon-carbon double bond and carbon-carbon triple bond. Examples of the unsaturated organic group include, of those organic groups described above, an alkenyl group, alkynyl group, dienyl group, cycloalkenyl group, and cycloalkadienyl group. In view of excellent film formation, of these examples, the alkenyl group and alkynyl group are preferred. Preferably, the alkenyl group is the vinyl group and allyl group. Preferably, the alkynyl group is the propargyl group. The alkenyl group and alkynyl group include those groups having a substituent described above. Examples of the substituent that may be included in the alkenyl group and alkynyl group include, of the above-described substituents, a halogen atom, hydroxy group, aryl group, aralkyl group, alkoxy group, alkoxy carbonyl group, acyl group, acyl oxy group, and nitrile group. In particular, the first component having two or three selected from the group consisting of an alkenyl group and an alkynyl group is preferable, and triallyl isocyanurate and diallyl isocyanurate are preferable. Triallyl isocyanurate (TIC) and diallyl isocyanurate (DIC) are each represented by the formula below.

[Chemical formula 2]

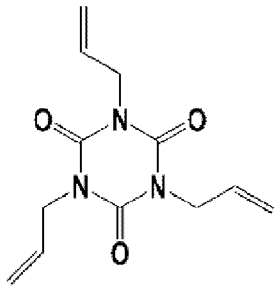

TIC

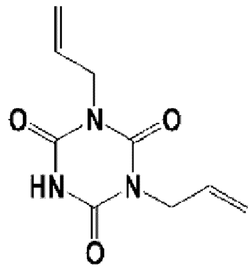

DIC

A content of the first component in the nonaqueous electrolyte is preferably 1.5 mass% or less, or may be 1 mass% or less, or 0.5 mass% or less. The content of the first component within such a range suppresses excessive film formation at the positive electrode surface, and the effects of suppressing the increase in the internal resistance with repetitive charge and discharge can be improved. In nonaqueous electrolyte secondary batteries, during storage or charge and discharge, the content of the first component in the nonaqueous electrolyte changes. Therefore, in the nonaqueous electrolyte of the nonaqueous electrolyte secondary battery, the first component remaining at a concentration of the detention limit or more is sufficient. The content of the first component in the nonaqueous electrolyte may be 0.01 mass% or more.

In the nonaqueous electrolyte used for the nonaqueous electrolyte secondary battery production, the content of the first component may be 0.01 mass% or more, 0.1 mass% or more, or 0.3 mass% or more. In the nonaqueous electrolyte used for the nonaqueous electrolyte secondary battery production, the content of the first component is, for example, 1.5 mass% or less, and may be 1 mass% or less, or 0.5 mass% or less. These lower limit values and upper limit values can be combined with any combination. By using the nonaqueous electrolyte having a content of the first component within such a range for battery production, a film with a high ion conductivity is suitably formed on the positive electrode surface, cycle characteristics can be further improved, and the effects of suppressing increase in the internal resistance can be improved even more.

The content of the first component in the nonaqueous electrolyte is determined, for example, by using gas chromatography, under the following conditions.

Device used: GC-2010 Plus manufactured by SHIMADZU CORPORATION
Column: HP-1 (film thickness 1 μm, internal diameter 0.32 mm, length 60 m) manufactured by J&W
Column temperature: increased to 90°C at temperature increase rate of 5°C/min from 50°C, kept at 90°C for 15 minutes, and then increased to 250°C at a temperature increase rate of 10°C/min from 90°C, and kept at 250°C for 15 minutes
Split ratio: 1/50
Linear velocity:30.0 cm/sec
Inlet temperature:270°C
Inlet amount: 1 μL
Detection unit: FID 290°C (sens.$10^1$)

(Second component)

When the second component is used, a composite film including components derived from both of the first component and second component is formed on the positive electrode surface. The composite film is a film in which excessive densification is suppressed, compared with the case where the film including the component derived only from the first component is formed. Therefore, while suppressing deterioration of the positive electrode active material particles and side reactions between the positive electrode and the nonaqueous electrolyte, increase in the film resistance can be suppressed, and decrease in capacity due to polarization involved with increase in resistance in the case when the first lithium-containing composite oxide is used can be suppressed.

Examples of the second component include an alkylene sulfite compound and alkenylene sulfite compound. The alkylene sulfite compound includes an alkylene sulfite which may have a substituent. The alkenylene sulfite compound includes an alkenylene sulfite which may have a substituent. Examples of the cyclic sulfite ester include a $C_{2-4}$ alkylene sulfite compound and $C_{2-4}$ alkenylene sulfite compound. Specific examples of the cyclic sulfite ester include ethylene sulfite, propylene sulfite, trimethylene sulfite, butylene sulfite, and vinylene sulfite. As the second component, $C_{2-4}$ alkylene sulfite, particularly, ethylene sulfite is preferred.

The second component includes, as described above, those having a substituent. The second component may be those having one, or two or more substituents. The second component may have a substituent at the carbon atom forming a ring of the second component. Examples of the substituent include the organic group and halogen atom described for those first components. Among the substituents, the alkyl group, hydroxy alkyl group, hydroxy group, alkoxy group, and halogen atom are preferred. A range of the number of the carbon atoms included in the substituent can be selected from the range described for the first component, and may be 1 to 4 or 1 to 3. When the second component has two or more substituents, at least two substituents may be the same, or all the substituents may be different.

For example, the ethylene sulfite which may have a substituent can be represented by the formula (2) below.

[Chemical formula 3]

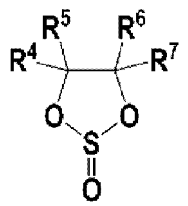

(2)

(where $R^4$ to $R^7$ each is a hydrogen atom or the above-described substituent)

For example, in the formula (2), a compound in which $R^4$ is methyl group, and $R^5$ to $R^7$ are each hydrogen atom is called propylene sulfite. For the second component, ethylene sulfite having a substituent such as propylene sulfite is preferably used.

The nonaqueous electrolyte may include one kind of the second component, or two or more kinds thereof.

The content of the second component in the nonaqueous electrolyte is, for example, 1.5 mass% or less, and may be 1 mass% or less, or 0.5 mass% or less. When the content of the second component is in such a range, a suitable film is easily formed, and a low resistance is easily maintained. In the nonaqueous electrolyte secondary batteries, during storage or charge and discharge, the content of the second component in the nonaqueous electrolyte changes. Therefore, in the nonaqueous electrolyte of the nonaqueous electrolyte secondary battery, the second component remaining at a concentration of the detention limit or more is sufficient. The content of the second component in the nonaqueous electrolyte may be 0.01 mass% or more.

In the nonaqueous electrolyte used for the nonaqueous electrolyte secondary battery production, the content of the second component may be 0.01 mass% or more, 0.1 mass% or more, or 0.3 mass% or more. In the nonaqueous electrolyte used for the nonaqueous electrolyte secondary battery production, the content of the second component is, for example, 1.5 mass% or less, and may be 1 mass% or less, or 0.5 mass% or less. These lower limit values and upper limit values can be combined in any combination. By using the nonaqueous electrolyte having a content of the second component within such a range for battery production, a film with excellent film qualities is formed on the positive electrode surface, and increase in the film resistance can be kept low, and the effects of suppressing side reactions can be improved even more.

The content of the second component in the nonaqueous electrolyte can be determined according to the case of the first component.

In the nonaqueous electrolyte, the mass ratio of the first component to the second component (= first component /second component) is, for example, 0.5 to 2, preferably 0.5 to 1.5, or 0.8 to 1.2. When the mass ratio of the first component to the second component is in such a range, while suppressing side reactions, the effects of suppressing the increase in the film resistance can be improved even more.

(Nonaqueous solvent)

Examples of the nonaqueous solvent include a cyclic carbonate, a chain carbonate, a cyclic carboxylate, and a chain carboxylate. Examples of the cyclic carbonate include propylene carbonate (PC) and ethylene carbonate (EC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate (MA), ethyl acetate, propyl acetate, methyl propionate, ethyl propionate, and propyl propionate. The nonaqueous electrolyte may include one kind of the nonaqueous solvent, or two or more kinds may be used in combination.

(Lithium salt)

Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylates, LiCl, LiBr, LiI, borates, and imide salts. Examples of the borates include lithium bis(1,2-benzene diolate (2-)-O,O') borate, lithium bis(2,3-naphthalene diolate (2-)-O,O') borate, lithium bis(2,2'-biphenyl diolate (2-)-O,O') borate, and lithium bis(5-fluoro-2-olate-1-benzene sulfonic acid-O,O') borate. Examples of the imide salts include lithium bis fluoro sulfonyl imide ($LiN(FSO_2)_2$), lithium bis trifluoro methane sulfonic acid imide ($LiN(CF_3SO_2)_2$), lithium trifluoro methane sulfonic acid nonafluoro butane sulfonic acid imide ($LiN(CF_3SO_2)(C_4F_9SO_2)$), and lithium bis pentafluoro ethane sulfonic acid imide ($LiN(C_2F_5SO_2)_2$). The nonaqueous electrolyte may include one kind of lithium salt, or two or more kinds thereof may be used in combination.
The lithium salt concentration of the nonaqueous electrolyte is, for example, 0.5 mol/L or more and 2 mol/L or less.
The nonaqueous electrolyte may include other additives. The other additives are called a third component. Examples of the third component include at least one selected from the group consisting of vinylene carbonate, fluoroethylene carbonate, and vinylethylene carbonate.

(Separator)

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric, or at least two laminates selected from these can be used. Polyolefin (e.g., polypropylene, polyethylene) is preferable for the separator material.

(Others)

In an example structure of the nonaqueous electrolyte secondary battery, an electrode group and a nonaqueous electrolyte are accommodated in an outer package, and the electrode group has a positive electrode and a negative electrode wound with a separator interposed therebetween. Alternatively, instead of the wound-type electrode group, other forms of electrode groups may be applied, such as a laminated electrode group in which the positive electrode and the negative electrode are laminated with a separator interposed therebetween. The nonaqueous electrolyte secondary battery may be any form, for example, a cylindrical type, a rectangular type, a coin-type, a button type, or a laminate type.
In the following, a structure of a rectangular nonaqueous electrolyte secondary battery is described as an example of the nonaqueous electrolyte secondary battery of the present disclosure with reference to FIG. 1. FIG. 1 is a partially cutaway schematic oblique view of a nonaqueous electrolyte secondary battery of an embodiment of the present disclosure.
The battery includes a bottomed rectangular battery case 4, and an electrode group 1 and a nonaqueous electrolyte accommodated in the battery case 4. The electrode group 1 has a negative electrode in the form of a long strip, a positive electrode in the form of a long strip, and a separator interposed therebetween for preventing direct contact therebetween. The electrode group 1 is formed by winding the negative electrode, the positive electrode, and the separator around a flat core and removing the core.
One end of the negative electrode lead 3 is attached to the negative electrode current collector of the negative electrode by welding or the like. The other end of the negative electrode lead 3 is electrically connected to the negative electrode terminal 6 provided in a sealing plate 5 with a resin-made insulating plate. The negative electrode terminal 6 is insulated from the sealing plate 5 by a gasket 7 made of resin. One end of the positive electrode lead 2 is attached to the positive electrode current collector of the positive electrode by welding or the like. The other end of the positive electrode lead 2 is connected to the back surface of the sealing plate 5 with an insulating plate. That is, the positive electrode lead 2 is electrically connected to the battery case 4 which also serves as the positive electrode terminal. The insulating plate separates the electrode group 1 and the sealing plate 5 and separates the negative electrode lead 3 and the battery case 4. The periphery of the sealing plate 5 is fitted to the open end of the battery case 4, and the fitting portion is laser welded. In this manner, the opening of the battery case 4 is sealed by the sealing plate 5. The injection hole for the electrolyte in a liquid form provided in the sealing plate 5 is plugged with a sealing plug 8.

[Examples]

In the following, the present disclosure will be described in detail based on Examples and Comparative Examples, but the present invention is not limited to Examples below.

<Examples 1 to 4 and Comparative Examples 1 to 5>

A nonaqueous electrolyte secondary battery was fabricated and evaluated as below.

(1) Production of positive electrode

To 95 parts by mass of positive electrode active material particles, 2.5 parts by mass of acetylene black, 2.5 parts by mass of polyvinylidene fluoride, and a suitable amount of NMP were added: the resultant was mixed, thereby producing a positive electrode slurry. Next, the positive electrode slurry was applied to a surface of aluminum foil, the applied film was dried and then rolled to form a positive electrode mixture layer (thickness 95 μm, density 3.6 g/cm$^3$) on both surfaces of aluminum foil, thereby producing a positive electrode.

The positive electrode active material particles are made based on the following procedures.

An aqueous solution was prepared, in which nickel sulfate, aluminum sulfate, and as necessary, cobalt sulfate or manganese sulfate were dissolved. In the aqueous solution, the nickel sulfate concentration was set to 1 mol/L, and the concentration of other sulfates were adjusted so that the ratios of Ni and the metal elements satisfy the values shown in Table 1.

While stirring the aqueous solution at 50°C, an aqueous solution containing sodium hydroxide at a 30 mass% concentration was dropped so that the mixture had a pH of 12, thereby allowing hydroxide to precipitate. Hydroxide was collected by filtration, washed with water and dried. The dried substance was baked in a nitrogen atmosphere at 500°C for 8 hours, thereby producing a composite oxide.

The produced composite oxide, lithium hydroxide, and as necessary oxide including element M (specifically, niobium oxide or calcium oxide) were mixed so that the atomic ratio of Li, a total of Ni, Co, Al, and Mn, and the element M was 1: 1: z (specifically, value z shown in Table 1). The mixture was heated to be baked using an electric furnace in an oxygen atmosphere at a temperature increase rate of 2.0°C/min, from room temperature to 650°C. Afterwards, the mixture was heated to be baked at a temperature increase rate of 0.5°C/min, from 650°C to 715°C. The baked product was washed with water and dried, thereby producing a lithium transition metal composite oxide (positive electrode active material particle).

(2) Production of negative electrode

A silicon composite material and graphite were mixed at a mass ratio of 5:95, and used as a negative electrode active material. The negative electrode active material, sodium salt (CMC-Na) of carboxymethyl cellulose, SBR, and water were mixed at a predetermined mass ratio, thereby preparing a negative electrode slurry. Next, the negative electrode slurry was applied to a surface of copper foil, which was the negative electrode current collector, and the applied film was dried and then rolled to form negative electrode mixture layers on both surfaces of the copper foil.

(3) Preparation of nonaqueous electrolyte

To a solvent mixture of EC and EMC (EC: EMC = 3:7 (volume ratio)), $LiPF_6$ and as necessary the first component and the second component shown in Table 1 were dissolved, thereby preparing a liquid electrolyte. The resultant liquid nonaqueous electrolyte had a $LiPF_6$ concentration of 1.0 mol/L. The prepared nonaqueous electrolyte had a first component concentration and a second component concentration (wherein both are initial concentrations) of the values shown in Table 1 (mass%).

(4) Fabrication of nonaqueous electrolyte secondary battery

An Al-made positive electrode lead was attached to the above-produced positive electrode, and a Ni-made negative electrode lead was attached to the above-produced negative electrode. The positive electrode and the negative electrode were wound with a polyethylene thin film (separator) interposed therebetween into a spiral shape in an inert gas atmosphere, thereby producing a wound-type electrode group. The electrode group was accommodated in a bag-type outer package formed with a laminate sheet including an Al layer, the above-described nonaqueous electrolyte was injected, and then the outer package was sealed, thereby producing a nonaqueous electrolyte secondary battery. Upon accommodating the electrode group in the outer package, a portion of the positive electrode lead and a portion of the negative electrode lead were allowed to be exposed to the outside of the outer package.

(5) Evaluation

The nonaqueous electrolyte secondary battery produced in Examples and Comparative Examples was evaluated as below.

(a) Initial direct current resistance value (DCIR)

In a 25°C temperature environment, the battery was subjected to constant current charging at a current of 0.3 It until the voltage reached 4.1 V, and thereafter, subjected to constant voltage charging at a constant voltage of 4.1 V until the current reached 0.05 It. Then, discharging was performed at a constant current of 0.3 It for 100 minutes to set the state of charge (SOC) to 50%.

The voltage value was measured when the battery of SOC50% was discharged for 10 seconds at each of current values of 0A, 0.1A, 0.5A, and 1.0A. The DCIR (initial DCIR) was calculated from the absolute value of the gradient of a straight line approximated by least squares method based on the relation of discharged current value and the voltage value after the discharging for 10 seconds.

(b) Charge and discharge cycle test

The battery was subjected to constant current charging at a constant current of 0.5 It until the voltage reached 4.1 V, and thereafter, subjected to constant voltage charging at a constant voltage of 4.1 V until the current reached 0.02 It under a 45°C temperature environment. Then, constant current discharging was performed at a constant current of 0.5 It until the voltage reached 3.0 V. Setting these charging and discharging as one cycle, 100 cycles were performed.

(c) DCIR increase rate

The DCIR (DCIR at 100th cycle) was calculated in the same manner as in the above-described (a), except that the battery after performing 100 cycles of charge and discharge in the above-described (b) charge and discharge cycle test was used. The DCIR increase rate of the ratio of the DCIR after 100 cycles relative to the initial DCIR was calculated based on the formula below.

$$\text{DCIR increase rate (\%)} = (\text{100th cycle DCIR/initial DCIR}) \times 100$$

(d) Cycle characteristics (Capacity Retention Rate)

In the above-described (b) charge and discharge cycle test, the discharge capacity at the 1st cycle and the discharge capacity at the 100th cycle were measured, and the capacity retention rate was determined by the formula below, as an index of cycle characteristics.

$$\text{Capacity retention rate (\%)} = (\text{100th cycle discharge capacity/1st cycle discharge capacity}) \times 100$$

The evaluation results are shown in Table 1. In Table 1, E1 to E4 correspond to Examples 1 to 4, and C1 to C5 correspond to Comparative Examples 1 to 5.

[Table 1]

| | $LiNi_{(1-x1-x2-y-z)}Co_{x1}Mn_{x2}Al_yM_zO_2$ | | | | | | First Component | | Second Component | | Capacity retention rate (%) | DCIR increase rate (%) |
|---|---|---|---|---|---|---|---|---|---|---|---|---|
| | 1-x-y-z | x1 | x2 | y | M | z | Type | (mass%) | Type | (mass%) | | |
| E1 | 0.92 | 0 | 0.03 | 0.05 | Nb | 0.0022 | TIC | 0.5 | ES | 0.5 | 87.4 | 22.3 |
| E2 | 0.92 | 0 | 0.03 | 0.05 | Nb | 0.0022 | DIC | 0.5 | ES | 0.5 | 86.9 | 23.4 |
| E3 | 0.92 | 0 | 0.03 | 0.05 | Nb | 0.0022 | TIC | 0.5 | PS | 0.5 | 86.6 | 23.9 |
| E4 | 0.92 | 0 | 0.03 | 0.05 | Ca | 0.001 | TIC | 0.5 | ES | 0.5 | 86.1 | 25.0 |
| C1 | 0.92 | 0 | 0.03 | 0.05 | Nb | 0.0022 | - | | - | | 85.2 | 25.2 |
| C2 | 0.92 | 0 | 0.03 | 0.05 | - | 0 | - | | - | | 81.9 | 39.4 |
| C5 | 0.92 | 0 | 0.03 | 0.05 | Ca | 0.001 | - | | - | | 83.8 | 33.1 |
| C3 | 0.91 | 0.045 | 0 | 0.045 | - | 0 | - | | - | | 82.7 | 39.1 |
| C4 | 0.91 | 0.045 | 0 | 0.045 | Nb | 0.0022 | TIC | 0.5 | ES | 0.5 | 85.9 | 24.1 |

TIC: Triallyl isocyanurate
DIC: Diallyl isocyanurate
ES: Ethylene sulfite
PS: Propylene sulfite

Table 1 shows that from comparison between C2 and C3, when using the first lithium-containing composite oxide with a Co ratio x1 of 0.04 or less, compared with the second lithium-containing composite oxide in which x1 is larger than 0.04, the capacity retention rate decreased (-0.8%), and the resistance increased (+ 0.3%). However, when the nonaqueous electrolyte including the first component is used, even with a small Co ratio x1, the capacity retention rate improved (+ 1.5%), and the resistance became low (-1.8%) (comparison between C4 and E1).

On the other hand, when a Co ratio x1 is larger than 0.04, even when the nonaqueous electrolyte including the first component is used, improving effects of the capacity retention rate was small, + 0.7%, and the effects of decrease in resistance was small -1.1% (comparison between C1 and C4).

In other words, when the Co ratio x1 is 0.04 or less, use of the nonaqueous electrolyte including the first component brought out the significant effect of the first component compared with the case where the Co ratio x1 is larger than 0.04. When the Co ratio x1 is small, the capacity retention rate tends to decrease originally, but by combining with the first component, the increase in the resistance is suppressed to low and capacity retention rate can be improved compared with the case where the Co ratio x1 is larger than 0.04.

Also when diallyl isocyanurate is used as the first component (E2), and when propylene sulfite is used as the second component (E3), excellent effects comparable to E1 were achieved. Also, when Ca is included as the element M as well, by using the nonaqueous electrolyte including the first component, capacity retention rate improved and the resistance was decreased significantly (comparison between E4 and C5).

[Industrial Applicability]

The nonaqueous electrolyte secondary battery according to the present disclosure is useful for a main power source of a mobile communication device, a portable electronic device, or the like. Furthermore, the nonaqueous electrolyte secondary battery has a high capacity and also excellent cycle characteristics, and therefore is suitable for applications adapted for vehicles. However, the nonaqueous electrolyte secondary battery applications are not limited to these.

[Reference Signs List]

1 Electrode Group
2 Positive Electrode Lead
3 Negative Electrode Lead
4 Battery Case
5 Sealing Plate
6 Negative Electrode Terminal
7 Gasket
8 Sealing Plug

## Claims

**1.** A nonaqueous electrolyte secondary battery including a positive electrode, a negative electrode, and a nonaqueous electrolyte, wherein

the positive electrode includes a positive electrode active material,
the positive electrode active material includes a lithium transition metal composite oxide including Ni, Al, and at least one of Co and Mn,
the lithium transition metal composite oxide is represented by a composition formula below:

$$Li_{\alpha}Ni_{(1-s-x2-y-z)}Co_{x1}Mn_{x2}Al_{y}M_{z}O_{2+\beta}$$

(where $0.95 \leq \alpha \leq 1.05$, $0.5 \leq 1\text{-}x1\text{-}x2\text{-}y\text{-}z \leq 0.95$, $0 \leq x1 \leq 0.04$, $0 \leq x2 \leq 0.1$, $0< y \leq 0.1$, $0 \leq z \leq 0.1$, $-0.05 \leq \beta \leq 0.05$, M is at least one selected from the group consisting of Ti, Zr, Nb, Mo, W, Fe, Zn, B, Si, Mg, Ca, Sr, and Y), and
the nonaqueous electrolyte includes an isocyanuric acid ester component having at least one unsaturated organic group with an unsaturated carbon-carbon bond.

2. The nonaqueous electrolyte secondary battery of claim 1, wherein the nonaqueous electrolyte further includes a cyclic sulfite ester component.

3. The nonaqueous electrolyte secondary battery of claim 2, wherein the cyclic sulfite ester component includes a $C_{2-4}$ alkylene sulfite compound.

4. The nonaqueous electrolyte secondary battery of claim 2 or 3, wherein in the nonaqueous electrolyte, a content of the cyclic sulfite ester component is 1.5 mass% or less.

5. The nonaqueous electrolyte secondary battery of any one of claims 2 to 4, wherein in the nonaqueous electrolyte, a mass ratio of the isocyanuric acid ester component relative to the cyclic sulfite ester component is 0.5 to 1.5.

6. The nonaqueous electrolyte secondary battery of any one of claims 1 to 5, wherein in the composition formula, $0 \leq x1 \leq 0.015$, $0 < x2 \leq 0.1$, and $0.05 \leq y + x2 \leq 0.2$ are satisfied.

7. The nonaqueous electrolyte secondary battery of any one of claims 1 to 6, wherein in the nonaqueous electrolyte, a content of the isocyanuric acid ester component is 1.5 mass% or less.

8. The nonaqueous electrolyte secondary battery of any one of claims 1 to 7, wherein the unsaturated organic group is an alkenyl group or an alkynyl group.

9. The nonaqueous electrolyte secondary battery of any one of claims 1 to 8, wherein the isocyanuric acid ester component includes at least one selected from the group consisting of triallyl isocyanurate and diallyl isocyanurate.

FIG. 1

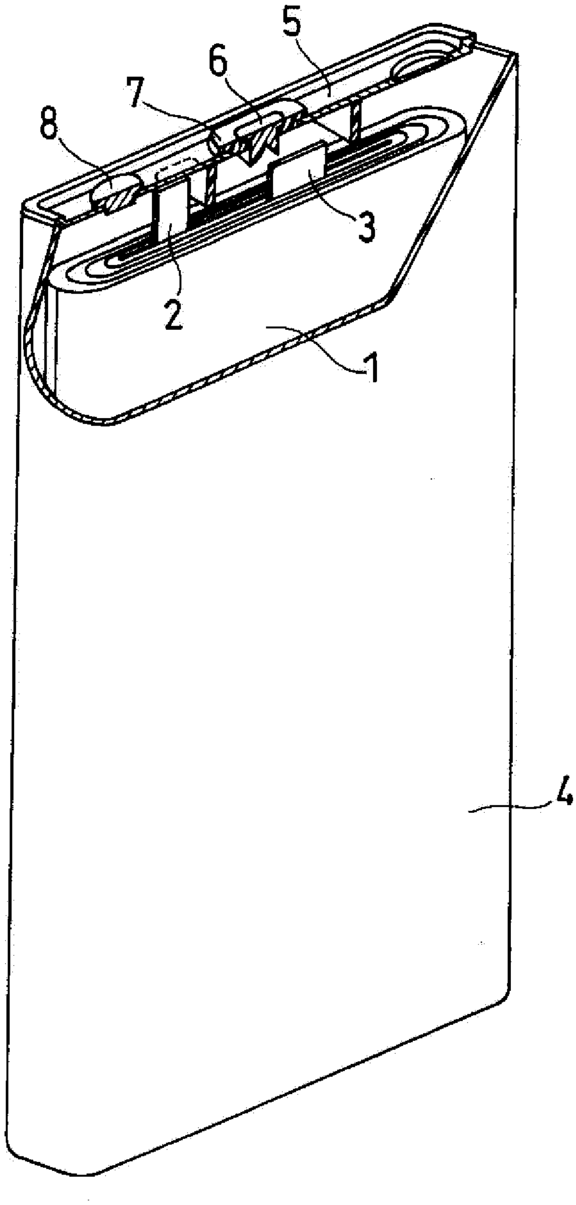

**INTERNATIONAL SEARCH REPORT**

International application No. PCT/JP2021/014949

A. CLASSIFICATION OF SUBJECT MATTER
H01M 4/505(2010.01)i; H01M 4/525(2010.01)i; H01M 10/052(2010.01)i; H01M 10/0567(2010.01)i
FI: H01M10/0567; H01M10/052; H01M4/525; H01M4/505
According to International Patent Classification (IPC) or to both national classification and IPC

B. FIELDS SEARCHED

Minimum documentation searched (classification system followed by classification symbols)
H01M4/00-4/62; H01M10/05-10/0587; H01M10/36-10/39

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2015-181106 A (MITSUBISHI CHEMICAL CORP.) 15 October 2015 (2015-10-15) paragraphs [0014]-[0152] | 1-9 |
| Y | JP 2011-082150 A (HITACHI MAXELL, LTD.) 21 April 2011 (2011-04-21) reference example 3 | 1-9 |
| Y | WO 2019/163367 A1 (PANASONIC IP MANAGEMENT CO., LTD.) 29 August 2019 (2019-08-29) paragraphs [0006]-[0059] | 1, 6-9 |
| Y | WO 2018/116941 A1 (PANASONIC IP MANAGEMENT CO., LTD.) 28 June 2018 (2018-06-28) paragraphs [0006]-[0051] | 1, 6-9 |
| Y | JP 2000-348765 A (MITSUI CHEMICALS, INC.) 15 December 2000 (2000-12-15) paragraphs [0009]-[0040] | 1, 6-9 |
| Y | JP 2001-345119 A (MATSUSHITA ELECTRIC INDUSTRIAL CO., LTD.) 14 December 2001 (2001-12-14) paragraphs [0005]-[0015] | 1, 6-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 June 2021 (10.06.2021) | 22 June 2021 (22.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/014949

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-358999 A (GS-MELCOTEC CO., LTD.) 13 December 2002 (2002-12-13) paragraphs [0013]-[0024] | 1, 6-9 |
| A | JP 2001-057235 A (MITSUI CHEMICALS, INC.) 27 February 2001 (2001-02-27) entire text, all drawings | 1-9 |
| A | JP 2019-160614 A (TDK CORPORATION) 19 September 2019 (2019-09-19) entire text, all drawings | 1-9 |
| A | JP 2012-043794 A (UMICORE S.A.) 01 March 2012 (2012-03-01) entire text, all drawings | 1-9 |

Form PCT/ISA/210 (continuation of second sheet) (January 2015)

**INTERNATIONAL SEARCH REPORT**
Information on patent family members

International application no.
PCT/JP2021/014949

| Patent Documents referred in the Report | Publication Date | Patent Family | Publication Date |
|---|---|---|---|
| JP 2015-181106 A | 15 Oct. 2015 | (Family: none) | |
| JP 2011-082150 A | 21 Apr. 2011 | US 2011/0269018 A1 example 3 | |
| WO 2019/163367 A1 | 29 Aug. 2019 | (Family: none) | |
| WO 2018/116941 A1 | 28 Jun. 2018 | US 2019/0326640 A1 paragraphs [0008]-[0044] | |
| JP 2000-348765 A | 15 Dec. 2000 | (Family: none) | |
| JP 2001-345119 A | 14 Dec. 2001 | US 2002/0009652 A1 paragraphs [0005]-[0025] | |
| JP 2002-358999 A | 13 Dec. 2002 | (Family: none) | |
| JP 2001-057235 A | 27 Feb. 2001 | (Family: none) | |
| JP 2019-160614 A | 19 Sep. 2019 | (Family: none) | |
| JP 2012-043794 A | 01 Mar. 2012 | US 2012/0074351 A1 the whole document | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014194930 A
- JP 2006310181 A